# EUROPÄISCHE PATENTSCHRIFT

(11) **EP 2 047 148 B1**
(45) Veröffentlichungstag und Bekanntmachung des Hinweises auf die Patenterteilung: **30.05.2012**
(21) Anmeldenummer: 07802274.6
(22) Anmeldetag: 12.09.2007
(51) Int. Cl.: F16J 15/32, F02M 59/44, F16J 15/56

(54) **DICHTUNGSANORDNUNG**
SEALING ARRANGEMENT
SYSTÈME D'ÉTANCHÉITÉ

(30) Priorität: 23.11.2006 DE 102006055298
(43) Veröffentlichungstag der Anmeldung: 15.04.2009
(73) Patentinhaber: ElringKlinger AG, 72581 Dettingen (DE); Robert Bosch GmbH, 70839 Gerlingen-Schillerhöhe (DE)
(72) Erfinder: HOCKER, Klaus, 74389 Cleebronn (DE); SCHUHMACHER, Walter, 74321 Bietigheim-Bissingen (DE); SCHEFZIK, Clemens, 71139 Ehningen (DE); LANG, Klaus, 70439 Stuttgart (DE); FLO, Siamend, 70499 Stuttgart (DE); PFUHL, Berthold, 71706 Markgröningen (DE); SIEGEL, Heinz, 70435 Stuttgart (DE)
(74) Vertreter: Hörner, Andreas
(86) Internationale Anmeldenummer: PCT/EP2007/007934
(87) Internationale Veröffentlichungsnummer: WO 2008/061581

(56) Entgegenhaltungen:
- EP-A- 1 273 835
- WO-A-2005/100794
- WO-A-2007/082111
- DE-A1- 3 403 686
- DE-A1- 10 338 587
- GB-A- 810 625
- GB-A- 2 296 538
- JP-A- 9 303 569
- US-A- 5 671 656
- US-A1- 2006 103 075
- US-A1- 2007 182 103

## Beschreibung

Die vorliegende Erfindung betrifft eine Dichtungsanordnung zum Abdichten zwischen einem mit einem ersten Medium gefüllten ersten Medienraum und einem mit einem zweiten Medium gefüllten zweiten Medienraum, wobei sich ein bewegliches Bauteil, das in seiner Längsrichtung verschiebbar und/oder um seine Längsrichtung drehbar ist, durch die Dichtungsanordnung hindurch erstreckt und wobei die Dichtungsanordnung ein Dichtelement umfasst, das einen gegenüber dem ersten Medienraum abdichtenden ersten Abdichtbereich und einen gegenüber dem zweiten Medienraum abdichtenden zweiten Abdichtbereich umfasst,
wobei der erste Abdichtbereich einen an dem beweglichen Bauteil anliegenden ersten dynamischen Dichtabschnitt und der zweite Abdichtbereich einen an dem beweglichen Bauteil anliegenden zweiten dynamischen Dichtabschnitt umfasst und mindestens einer der beiden dynamischen Dichtabschnitte mindestens zwei Dichtlippen aufweist.

Eine solche Dichtungsanordnung ist aus dem Stand der Technik bekannt.

Insbesondere ist es bekannt, zur Abdichtung des Kolbens einer Hochdruckpumpe für die Direkteinspritzung von Benzin in die Zylinder eines Otto-Motors eine Dichtungsanordnung zu verwenden, deren Dichtelement einen gegenüber der Benzinseite abdichtenden ersten dynamischen Dichtebschnitt mit zwei Dichtlippen und einen gegenüber der Motorölseite abdichtenden zweiten dynamischen Dichtabschnitt mit einer Memory-Abdichtlippe umfasst.

Dabei ist ein Federelement vorgesehen, welches den ersten dynamischen Dichtabschnitt mit den zwei Dichtlippen gegen die Kolbenlauffläche des Kolbens vorspannt. Der zweite dynamische Dichtabschnitt mit der Memory-Dichtlippe ist hingegen unbefedert.

Eine solche bekannte Dichtungsanordnung weist jedoch insbesondere bei hohem Differenzdruck zwischen dem ersten Medienraum und dem zweiten Medienraum hohe Leckage-Werte auf.

Die GB 810625 A offenbart eine Dichtungsanordnung gemäß dem Oberbegriff von Anspruch 1.

Der vorliegenden Erfindung liegt die Aufgabe zugrunde, eine Dichtungsanordnung der eingangs genannten Art zu schaffen, welche eine zuverlässige Abdichtung zwischen den Medienräumen bei geringen Leckage-Werten auch über einen längeren Einsatzzeitraum hinweg gewährleistet.

Diese Aufgabe wird durch eine Dichtungsanordnung nach Anspruch 1 gelöst.

Durch die Vorspannung der Dichtlippen beider dynamischer Dichtabschnitte des Dichtelements gegen die Dichtfläche des beweglichen Bauteils wird erreicht, dass sowohl auf der Seite des ersten Mediums als auch auf der Seite des zweiten Mediums nur noch eine sehr geringe Leckage auftritt, so dass die Abdichtwirkung der Dichtungsanordnung zwischen dem ersten Medienraum und dem zweiten Medienraum deutlich verbessert ist.

Das erste und/oder das zweite Medium ist vorzugsweise eine Flüssigkeit.

Insbesondere können das erste Medium und das zweite Medium voneinander verschiedene Flüssigkeiten sein.

Von den beiden dynamischen Dichtabschnitten des Dichtelements weist einer mindestens zwei Dichtlippen auf, während der jeweils andere mindestens eine Dichtlippe aufweist.

Bei einer bevorzugten Ausgestaltung der erfindungsgemäßen Dichtungsanordnung ist vorgesehen, dass beide dynamischen Dichtabschnitte jeweils mindestens zwei Dichtlippen aufweisen.

Eine noch bessere Abdichtwirkung wird erzielt, wenn mindestens einer der dynamischen Dichtabschnitte mindestens drei Dichtlippen aufweist.

Besonders günstig zur Erzielung geringer Leckage-Werte ist es, wenn beide dynamischen Dichtabschnitte jeweils mindestens drei Dichtlippen aufweisen.

Das Dichtelement ist vorzugsweise ringförmig und insbesondere rotationssymmetrisch bezüglich der Längsrichtung des beweglichen Bauteils ausgebildet.

Damit das Dichtelement sowohl in einer Ausgangsstellung als auch in einer um 180° gegenüber der Ausgangsstellung gedrehten Stellung in die Dichtungsanordnung eingesetzt werden kann, ist vorzugsweise vorgesehen, dass das Dichtelement im wesentlichen spiegelsymmetrisch bezüglich einer senkrecht zur Längsrichtung des beweglichen Bauteils verlaufenden Quermittelebene des Dichtelements ausgebildet ist. Auf diese Weise wird die Montage der Dichtungsanordnung wesentlich vereinfacht.

Um eine zusätzliche Führung des Dichtelements an dem beweglichen Bauteil zu erzielen, umfasst das Dichtelement einen zwischen dem ersten dynamischen Dichtabschnitt und dem zweiten dynamischen Dichtabschnitt angeordneten Mittelsteg, der im montierten Zustand der Dichtungsanordnung an dem beweglichen Bauteil anliegt.

Bei einer bevorzugten Ausgestaltung der erfindungsgemäßen Dichtungsanordnung ist vorgesehen, dass der erste Abdichtbereich einen radial auswärts von dem ersten dynamischen Dichtabschnitt angeordneten ersten statischen Dichtabschnitt umfasst.

Ferner ist vorzugsweise vorgesehen, dass der zweite Abdichtbereich einen radial auswärts von dem zweiten dynamischen Dichtabschnitt angeordneten zweiten statischen Dichtabschnitt umfasst.

Der erste statische Dichtabschnitt und der zweite statische Dichtabschnitt liegen vorzugsweise abdichtend an einem Dichtungsträger, in welchen das Dichtelement eingesetzt ist, an.

Die statischen Dichtabschnitte können in axialer Richtung des Dichtelements, d.h. in der parallel zur Längsrichtung des beweglichen Bauteils verlaufenden Richtung, im wesentlichen dieselbe Ausdehnung aufweisen wie die zugehörigen dynamischen Dichtabschnitte. Insbesondere können die axialen Enden der statischen Dichtabschnitte denselben Abstand von einer Quermittelebene des Dichtelements aufweisen wie die axialen Enden der dynamischen Dichtabschnitte.

Alternativ dazu kann aber auch vorgesehen sein, dass mindestens ein statischer Dichtabschnitt in axialer Richtung über den zugehörigen dynamischen Dichtabschnitt desselben Abdichtbereiches übersteht. Auf diese Weise kann erreicht werden, dass sich das Dichtelement nur über den betreffenden statischen Dichtabschnitt an einem Dichtungsträger, in welchen das Dichtelement eingesetzt wird, abstützt und dass beim Einpressen des Dichtelements in den Dichtungsträger der zugehörige dynamische Dichtabschnitt nicht belastet wird.

Mindestens ein statischer Dichtabschnitt des Dichtelements kann sich in axialer Richtung an einem Dichtungsträger oder an einem anderen Bauelement der Dichtungsanordnung abstützen.

Das Dichtelement der erfindungsgemäßen Dichtungsanordnung umfasst vorteilhafterweise ein Fluorpolymer-Material.

Insbesondere kann vorgesehen sein, dass das Dichtelement ein Polytetrafluorethylen (PTFE) oder ein modifiziertes Polytetrafluorethylen umfasst.

Dabei ist unter einem "modifizierten Polytetrafluorethylen" ein PTFE-ähnlicher Stoff zu verstehen, bei welchem die Molekülstruktur des PTFE dadurch chemisch modifiziert worden ist, dass neben Tetrafluorethylen noch ein weiteres, ebenfalls perfluoriertes Monomer in die Molekülkette eingebaut wurde, so dass die Fluoratome des PTFE teilweise durch Substituenten ersetzt sind.

Die chemische Zusammensetzung und Herstellung von "modifiziertem PTFE" sind beispielsweise in der EP 0 041 687 A1, der EP 0 931 798 A1 oder der US-Patentschrift Nr. 6,013,700 beschrieben.

Solche PTFE-haltigen Werkstoffe weisen eine besonders gute Temperatur- und Chemikalienbeständigkeit sowie gute Trockenlaufeigenschaften auf.

Das Dichtelement kann aus Polytetrafluorethylen oder aus einem modifizierten Polytetrafluorethylen bestehen.

Alternativ hierzu kann auch vorgesehen sein, dass das Dichtelement aus einem Polytetrafluorethylen-Compound oder aus einem modifizierten Polytetrafluorethylen-Compound gebildet ist, d.h. aus einer Mischung eines Polytetrafluorethylens oder eines modifizierten Polytetrafluorethylens mit einem oder mehreren organischen oder anorganischen Füllstoffen.

Um bei einer Hubbewegung des beweglichen Bauteils an einer Dichtlippe des Dichtelements vorbei gelangtes Leckage-Medium zwischenspeichern und bei einem Rückhub des beweglichen Bauteils wieder auf die richtige Medienseite zurückfördern zu können, weist mindestens ein dynamischer Dichtabschnitt des Dichtelements mindestens einen Leckage-Speicherraum auf der zwischen zwei benachbarten Dichtlippen des betreffenden dynamischen Dichtabschnitts ausgebildet ist.

Ein solcher Leckage-Speicherraum ist vorzugsweise ringförmig ausgebildet.

Mindestens ein dynamischer Dichtabschnitt des Dichtelements weist mehrere, in der Längsrichtung des beweglichen Bauteils aufeinanderfolgende Leckage-Speicherräume auf.

Die Leckage-Speicherräume des dynamischen Dichtabschnitts weisen unterschiedliche Größen auf, um dem Umstand Rechnung zu tragen, dass die Leckage-Menge von den axialen Enden des Dichtelements zur Mitte des Dichtelements hin abnimmt, da die Leckage-Medien eine zunehmende Anzahl von Dichtlippen passieren müssen, um näher zur Mitte des Dichtelements zu gelangen.

Unterschiedlich große Leckage-Speicherräume können beispielsweise dadurch erzeugt werden, dass die Dichtlippen, welche die Leckage-Speicherräume begrenzen, im Herstellungszustand des Dichtelements unterschiedliche Innendurchmesser aufweisen. Bei der Montage der Dichtungsanordnung werden diese Dichtlippen dann so verformt, dass sie einen dem Außendurchmesser des beweglichen Bauteils entsprechenden Innendurchmesser aufweisen, damit die Dichtlippen im Betrieb der Dichtungsanordnung abdichtend an der Dichtfläche des beweglichen Bauteils anliegen.

Es ist vorgesehen, dass die Größe der Leckage-Speicherräume mit wachsendem Abstand von einem medienraumseitigen axialen Ende des Dichtelements abnimmt.

Dies kann insbesondere dadurch erreicht werden, dass der Innendurchmesser der Dichtlippen, welche die Leckage-Speicherräume begrenzen, im Herstellungszustand des Dichtelements mit wachsendem Abstand von einem medienraumseitigen Ende des Dichtelements zunimmt.

Mindestens eine Dichtlippe des Dichtelements ist vorzugsweise so ausgestaltet, dass sie zwei Begrenzungsflächen aufweist, die unter unterschiedlichen Winkeln (α, β) gegen eine senkrecht zur Längsrichtung des beweglichen Bauteils verlaufende Ebene geneigt sind.

Dabei ist vorzugsweise diejenige Begrenzungsfläche, die zu dem nächstliegenden medienraumseitigen Ende des Dichtelements hinweist, unter einem kleineren Winkel (α) gegen die senkrecht zur Längsrichtung des beweglichen Bauteils verlaufende Ebene geneigt als diejenige Begrenzungsfläche, welche in die dem nächstliegenden medienraumseitigen Ende des Dichtelements abgewandte Richtung weist. Durch diese Gestaltung der Dichtlippe wird erreicht, dass das Leckage-Medium die Dichtlippe nur schwer in der Richtung von einem medienraumseitigen Ende des Dichtelements weg überwinden kann, aber leicht in der Gegenrichtung zu einem medienraumseitigen Ende des Dichtelements hin zurückgeschleppt werden kann.

Die Dichtlippen des Dichtelements der erfindungsgemäßen Dichtungsanordnung können scharf begrenzte, nur längs einer Linie an einer Dichtfläche des beweglichen Bauteils anliegende Dichtkanten aufweisen.

Alternativ hierzu kann auch vorgesehen sein, dass mindestens ein dynamischer Dichtabschnitt des Dichtelements mindestens eine abgeflachte Dichtlippe aufweist, die sich mit einer im wesentlichen parallel zur Längsrichtung des beweglichen Bauteils ausgerichteten Abstützfläche im montierten Zustand der Dichtungsanordnung an dem beweglichen Bauteil abstützt. Durch diese im Vergleich zu einer scharfen Dichtkante größere Abstützfläche wird die spezifische Flächenpressung an der betreffenden Dichtlippe vermindert und der Traganteil der Dichtlippe im Neuzustand erhöht, wodurch der Dichtlippenverschleiß reduziert und die Lebensdauer des Dichtelements verlängert wird. Der Dichtlippenverschleiß wird durch die abgeflachte Form der Dichtlippe insbesondere dann verringert, wenn eines der an dem Dichtelement anliegenden Medien Verschmutzungspartikel enthält (beispielsweise im Fall eines verschmutzten Öls).

Um Schmutzpartikel aus mindestens einem der beiden Medienräume, beispielsweise aus einem mit Motoröl gefüllten Medienraum, von den Dichtlippen des Dichtelements fernzuhalten, ist es günstig, wenn mindestens ein dynamischer Dichtabschnitt des Dichtelements zusätzlich zu den Dichtlippen eine Abstreiflippe aufweist.

Insbesondere kann vorgesehen sein, dass die Abstreiflippe in axialer Richtung über einen statischen Dichtabschnitt desselben Abdichtbereiches des Dichtelements übersteht.

Das Dichtelement kann symmetrisch ausgestaltet sein, wenn beide dynamischen Dichtabschnitte des Dichtelements zusätzlich zu den Dichtlippen jeweils eine Abstreiflippe aufweisen. In diesem Fall kommt es auf die Orientierung des Dichtelements relativ zu dem beweglichen Bauteil nicht an, so dass das Dichtelement in zwei um 180° gegeneinander verdrehten Positionen montiert werden kann, was die Montage der erfindungsgemäßen Dichtungsanordnung vereinfacht.

Bei einer bevorzugten Ausgestaltung der erfindungsgemäßen Dichtungsanordnung ist vorgesehen, dass mindestens eine Abstreiflippe des Dichtelements als eine Memory-Abstreiflippe ausgebildet ist.

Eine solche Abstreiflippe ist durch einen Memory-Effekt des für die Abstreiflippe verwendeten Materials, insbesondere eines PTFE- oder PTFE-Compound-Materials, gegen die Dichtfläche des beweglichen Bauteils vorgespannt.

Dieser Memory-Effekt kommt dadurch zustande, dass die Memory-Abstreiflippe zunächst durch spanende Bearbeitung mit einem Innendurchmesser hergestellt wird, welcher kleiner ist als der Außendurchmesser des beweglichen Bauteils, und die Memory-Abstreiflippe anschließend, bei Raumtemperatur oder bei erhöhter Temperatur, so verformt wird, dass das bewegliche Bauteil hindurchgeführt werden kann. Bei einer Erwärmung der Dichtungsanordnung während des Betriebs derselben verformt sich der Werkstoff der Memory-Abstreiflippe in Richtung seiner ursprünglichen Gestalt zurück. Durch diesen Memory-Effekt ist die Memory-Abstreiflippe somit gegen die Dichtfläche des beweglichen Bauteils vorgespannt und wird im Zuge des Verschleißes der Memory-Abstreiflippe während des Betriebes der Dichtungsanordnung kontinuierlich gegen das bewegliche Bauteil nachgestellt, so dass stets eine hinreichende Abstreifwirkung der Memory-Abstreiflippe gewährleistet ist.

Der mittlere Differenzdruck zwischen dem ersten Medienraum und dem zweiten Medienraum beträgt im Betrieb der Dichtungsanordnung vorzugsweise mindestens ungefähr 5 bar, insbesondere mindestens ungefähr 10 bar. Auch bei solch hohen mittleren Differenzdrücken gewährleistet die erfindungsgemäße Dichtungsanordnung eine zuverlässige Abdichtung zwischen den beiden Medienräumen, mit sehr geringen Leckage-Werten.

Durch Druckpulsationen kann der maximale Differenzdruck zwischen dem ersten Medienraum und dem zweiten Medienraum um bis zu ungefähr 15 bar über dem mittleren Differenzdruck liegen.

Vorzugsweise beträgt der maximale Differenzdruck zwischen den Medienräumen mindestens ungefähr 20 bar.

Die erfindungsgemäße Dichtungsanordnung eignet sich insbesondere zur Verwendung in einer Hochdruckpumpe, insbesondere zur Verwendung in einer Hochdruckpumpe zum Einspritzen eines Kraftstoffs in einen Verbrennungsmotor.

Mit einer solchen Hochdruckpumpe wird beispielsweise zur Leistungssteigerung von Otto-Motoren der Kraftstoff (Benzin) direkt in die Zylinder des Verbrennungsmotors eingespritzt, ähnlich wie bei der Common-Rail-Technik für Diesel-Motoren. Zur Erzeugung des hierfür erforderlichen hohen Benzindruckes wird eine Kolben-Hochdruckpumpe verwendet. Die Kolben dieser Hochdruckpumpe werden von der Nockenwelle mit speziellen Nocken angetrieben und über Federelemente zurückgestellt. Zur Abdichtung der Benzinseite gegenüber der mit Motoröl gefüllten Nockenwellenseite kann die erfindungsgemäße Dichtungsanordnung verwendet werden.

Durch die geringen Benzin-Leckage-Werte der erfindungsgemäßen Dichtungsanordnung wird verhindert, dass zuviel Benzin in das Motoröl gelangt, was eine zum Motorausfall führende Ölverdünnung verursachen könnte.

Ebenso verhindert die erfindungsgemäße Dichtungsanordnung, dass zuviel Motoröl in das Benzin gelangt, was zu Filter- und Düsenverstopfungen und somit ebenfalls zum Motorausfall führen könnte.

Ferner ermöglicht es die erfindungsgemäße Dichtungsanordnung, nicht nur das unter Druck stehende Benzin abzudichten, sondern auch das nahezu drucklose Öl der Nockenwelle in effizienter Weise abzustreifen.

Durch die erhöhte Anzahl von Dichtlippen, welche zur Abdichtung an dem beweglichen Bauteil anliegen, wird auch der Dichtlippen- und Dichtkantenverschleiß verringert, so dass die erfindungsgemäße Dichtungsanordnung über einen längeren Zeitraum hinweg einsatzfähig ist.

Weitere Merkmale und Vorteile der Erfindung sind Gegenstand der nachfolgenden Beschreibung und der zeichnerischen Darstellung von Ausführungsbeispielen.

In den Zeichnungen zeigen:

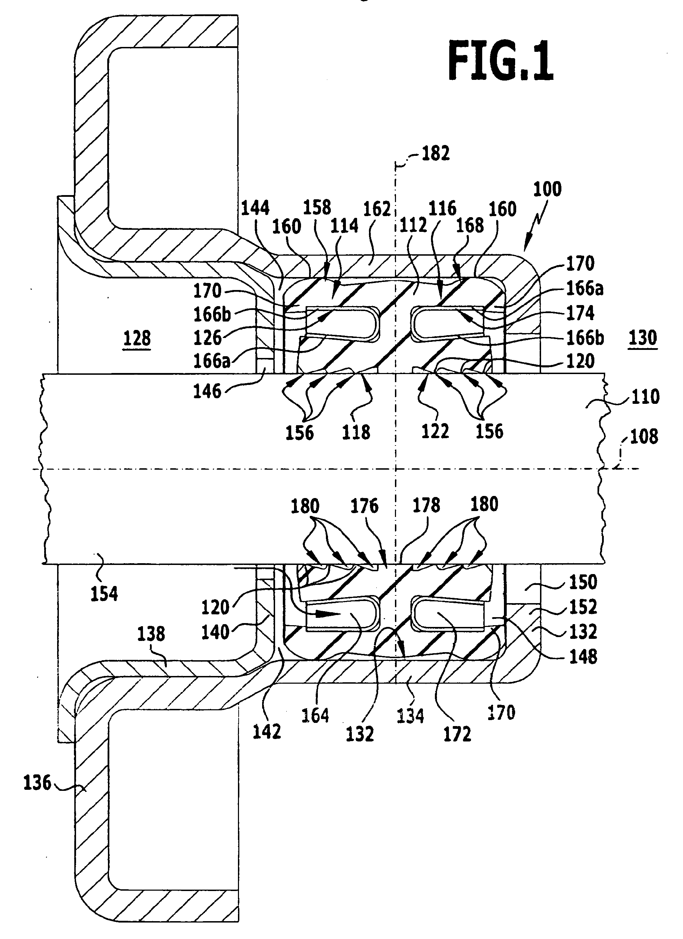

- Fig. 1: einen schematischen Längsschnitt durch eine erste, nicht unter den Wortlaut der beigefügten Ansprüche fallende Ausführungsform einer Dichtungsanordnung, insbesondere für eine Hochdruckpumpe zur Benzindirekteinspritzung, im eingebauten Zustand, wobei ein Dichtelement der Dichtungsanordnung einen gegenüber einem ersten Medienraum abdichtenden ersten Abdichtbereich mit einem ersten dynamischen Dichtabschnitt, welcher drei Dichtlippen aufweist und mittels eines Federelements gegen einen längsverschieblichen Kolben vorgespannt ist, und einen gegenüber einem zweiten Medienraum abdichtenden zweiten Abdichtbereich mit einem zweiten dynamischen Dichtabschnitt, welcher ebenfalls drei Dichtlippen aufweist und mittels eines Federelements gegen den Kolben vorgespannt ist, umfasst;
- Fig. 2: einen schematischen Längsschnitt durch das Dichtelement einer zweiten Ausführungsform einer Dichtungsanordnung, bei welchem die Dichtlippen der dynamischen Dichtabschnitte unterschiedliche Innendurchmesser aufweisen;
- Fig. 3: einen schematischen Längsschnitt durch das Dichtelement einer dritten Ausführungsform einer Dichtungsanordnung, bei welchem die Dichtlippen der dynamischen Dichtabschnitte unterschiedliche Innendurchmesser aufweisen und den dynamischen Dichtabschnitten jeweils zugeordnete statische Dichtabschnitte in axialer Richtung über die dynamischen Dichtabschnitte überstehen;
- Fig. 4: einen schematischen Längsschnitt durch das Dichtelement einer vierten Ausführungsform einer Dichtungsanordnung, bei welchem die dynamischen Dichtabschnitte abgeflachte Dichtlippen aufweisen;
- Fig. 5: einen schematischen Längsschnitt durch eine fünfte Ausführungsform einer Dichtungsanordnung, bei welcher das Dichtelement an dem zweiten Abdichtbereich mit einer zusätzlichen Abstreiflippe versehen ist;
- Fig. 6: einen schematischen Querschnitt durch das Dichtelement einer sechsten Ausführungsform einer Dichtungsanordnung, bei welchem beide Abdichtbereiche mit zusätzlichen Abstreiflippen versehen sind;
- Fig. 7: einen schematischen Längsschnitt durch eine siebte Ausführungsform einer Dichtungsanordnung, bei welcher der zweite Abdichtbereich des Dichtelements mit einer Abstreiflippe mit Memory-Effekt versehen ist; und
- Fig. 8: einen schematischen Längsschnitt durch das Dichtelement einer achten Ausführungsform einer Dichtungsanordnung, bei welcher der erste dynamische Dichtabschnitt drei Dichtlippen und der zweite dynamische Dichtabschnitt zwei Dichtlippen und eine Abstreiflippe mit Memory-Effekt aufweist.

Gleiche oder funktional äquivalente Elemente sind in allen Figuren mit denselben Bezugszeichen bezeichnet.

Eine in Fig. 1 dargestellte, als Ganzes mit 100 bezeichnete Dichtungsanordnung für eine Hochdruckpumpe dient zur Abdichtung zwischen einem ersten Medienraum 128, der mit einer Flüssigkeit, beispielsweise Kraftstoff, insbesondere Benzin, gefüllt ist, und einem zweiten Medienraum 130, der mit einer anderen Flüssigkeit, beispielsweise mit Motoröl, befüllt ist.

Die Dichtungsanordnung 100 umfasst einen Dichtungsträger 132 mit einem mittigen, im wesentlichen hohlzylindrischen Dichtungsaufnahmebereich 134 und einem äußeren, den Dichtungsaufnahmebereich 134 ringförmig umgebenden Randbereich 136.

In den Dichtungsträger 132 ist eine Hülse 138 eingepresst, deren mittige Stirnwand 140 zusammen mit dem Dichtungsaufnahmebereich 134 des Dichtungsträgers 132 einen Dichtungsraum 142 begrenzt, in welchem ein ringförmiges Dichtelement 112 angeordnet ist.

Ein erster Bereich 144 des Dichtungsraums 142 steht über eine Durchtrittsöffnung 146 in der Stirnwand 140 der Hülse 138 mit dem ersten Medienraum 128 in Verbindung, so dass dieser erste Bereich des Dichtungsraums 144 mit dem ersten Medium, beispielsweise Kraftstoff, gefüllt ist.

Ein zweiter Bereich 148 des Dichtungsraums 142 steht über eine Durchtrittsöffnung 150 in einer mittigen Stirnwand 152 des Dichtungsaufnahmebereichs 134 des Dichtungsträgers 132 mit dem zweiten Medienraum 130 in Verbindung und ist daher mit dem zweiten Medium, beispielsweise mit Motoröl, gefüllt.

Der erste Bereich 144 und der zweite Bereich 148 des Dichtungsraums 142 sind durch ein im Dichtungsraum 142 angeordnetes ringförmiges Dichtelement 112 im wesentlichen fluiddicht voneinander getrennt.

Ferner erstreckt sich ein im wesentlichen zylindrischer Kolben 110, der längs seiner Längsachse 108 verschiebbar ist und dessen Umfangsfläche eine Kolbenlauffläche 154 bildet, durch die Durchtrittsöffnung 146 in der Stirnwand 140 der Hülse 138, durch die mittige Ringöffnung des Dichtelements 112 in dem Dichtungsraum 142 und durch die Durchtrittsöffnung 150 in der Stirnwand 152 des Dichtungsträgers 132 hindurch von dem ersten Medienraum 128 in den zweiten Medienraum 130.

Das Dichtelement 112 umfasst einen ersten Abdichtbereich 114, der gegenüber dem ersten Medienraum 128 abdichtet, und einen zweiten Abdichtbereich 116, der gegenüber dem zweiten Medienraum 130 abdichtet.

Der erste Abdichtbereich 114 umfasst einen ersten dynamischen Dichtabschnitt 118, der drei koaxial zur Längsachse 108 des Kolbens 110, welche mit der Längsachse des Dichtelements 112 zusammenfällt, ausgebildete, ringförmig geschlossene Dichtlippen 120 aufweist, welche in Richtung der Längsachse 108 aufeinanderfolgen und jeweils mit einer scharfen Dichtkante 156 an der Kolbenlauffläche 154 anliegen.

Ferner umfasst der erste Abdichtbereich 114 einen radial auswärts von dem ersten dynamischen Dichtabschnitt 118 angeordneten ersten statischen Dichtabschnitt 158 mit einer Dichtlippe 160, die abdichtend an der Innenseite des parallel zur Längsachse 108 verlaufenden Abschnitts 162 des Dichtungsträgers 132 anliegt.

Der erste statische Dichtabschnitt 158 ist von dem ersten dynamischen Dichtabschnitt 118 durch eine in dem Dichtelement 112 vorgesehene Ringnut 164 getrennt, welche zu einem axialen Ende des Dichtelements 112 hin offen ist und in welcher ein ringförmig geschlossenes erstes Federelement 126 angeordnet ist, dessen einander gegenüberliegende Schenkel 166a und 166b den ersten dynamischen Dichtabschnitt 118 gegen die Kolbenlauffläche 154 bzw. den ersten statischen Dichtabschnitt 158 gegen den Abschnitt 162 des Dichtungsträgers 132 elastisch vorspannen.

Der zweite Abdichtbereich 116 des Dichtelements 112 umfasst einen zweiten dynamischen Dichtabschnitt 122, der ebenso wie der erste dynamische Dichtabschnitt 118 drei koaxial zur Längsachse 108 ausgebildete, ringförmig geschlossene Dichtlippen 120 aufweist, welche längs der Längsachse 108 aufeinanderfolgen und voneinander beabstandet sind. Diese Dichtlippen 120 liegen mittels jeweils einer scharfen Dichtkante 156 an der Kolbenlauffläche 154 an.

Der zweite Abdichtbereich 116 des Dichtelements 112 umfasst ferner einen radial auswärts von dem zweiten dynamischen Dichtabschnitt 122 angeordneten zweiten statischen Dichtabschnitt 168, der eine Dichtlippe 160 aufweist, welche an der Innenseite des Abschnitts 162 des Dichtungsträgers 132 abdichtend anliegt.

Außerdem steht der zweite statische Dichtabschnitt 168 in axialer Richtung, d.h. in Richtung der Längsachse 108, über das Ende des zweiten dynamischen Dichtabschnitts 122 über, wobei der überstehende Bereich eine Schulter 170 bildet, mit der sich das Dichtelement 112 unter der Einwirkung eines erhöhten Druckes im ersten Medienraum 128 an der Stirnwand 152 des Dichtungsträgers 132 abstützt.

Der Differenzdruck zwischen dem ersten Medienraum 128 und dem zweiten Medienraum 130 beträgt beispielsweise ungefähr 12 bar.

Der zweite statische Dichtabschnitt 168 ist von dem zweiten dynamischen Dichtabschnitt 122 durch eine an dem Dichtelement 112 ausgebildete Ringnut 172 getrennt, welche zu einem axialen Ende des Dichtelements 112 hin offen ist und in welcher ein ringförmiges zweites Federelement 174 angeordnet ist, dessen Schenkel 166a und 166b den zweiten dynamischen Dichtabschnitt 122 gegen die Kolbenlauffläche 154 bzw. den zweiten statischen Dichtabschnitt 168 gegen den Abschnitt 162 des Dichtungsträgers 132 elastisch vorspannen.

Zwischen dem ersten dynamischen Dichtabschnitt 118 und dem zweiten dynamischen Dichtabschnitt 122 ist ein Mittelsteg 176 ausgebildet, der radial nach innen zu dem Kolben 110 hin vorsteht und mit einer im wesentlichen zylindrischen Abstützfläche 178 flächig an der Kolbenlauffläche 154 anliegt, so dass das Dichtelement 112 hierdurch auf dem Kolben 110 geführt ist.

Zwischen jeweils zwei einander benachbarten Dichtlippen 120 der dynamischen Dichtabschnitte 118, 122 sowie zwischen der jeweils am nächsten zu dem Mittelsteg 176 gelegenen Dichtlippe 120 und dem Mittelsteg 176 ist jeweils ein koaxial zur Längsachse 108 ausgebildeter, ringförmiger Leckage-Speicherraum 180 ausgebildet, wobei aufeinanderfolgende Leckage-Speicherräume 180 durch die dazwischenliegenden Dichtkanten 156 bzw. durch den Mittelsteg 176 voneinander getrennt sind.

Dadurch, dass in dem ersten dynamischen Dichtabschnitt 118 und in dem zweiten dynamischen Dichtabschnitt 122 jeweils drei Dichtlippen 120 vorgesehen sind, welche über Dichtkanten 156 an der Kolbenlauffläche 154 anliegen, wird die Leckage des ersten Mediums in den zweiten Medienraum 130 und die Leckage des zweiten Mediums in den ersten Medienraum 128 gegenüber bekannten Dichtungsanordnungen deutlich reduziert.

Leckage-Flüssigkeit aus dem ersten Medienraum 128 wird in den Leckage-Speicherräumen 180 des ersten dynamischen Dichtabschnitts 118 gespeichert und beim Rückhub des Kolbens 110 wieder in den ersten Medienraum 128 zurückgeschleppt.

Ebenso wird Leckage-Flüssigkeit aus dem zweiten Medienraum 130 in den Leckage-Speicherräumen 180 des zweiten dynamischen Dichtabschnitts 122 gesammelt und beim Rückhub des Kolbens wieder in den zweiten Medienraum 130 zurückgeschleppt.

Alle sechs Leckage-Speicherräume 180 des Dichtelements 112 (je drei Leckage-Speicherräume 180 im ersten dynamischen Dichtabschnitt 118 und im zweiten dynamischen Dichtabschnitt 122) sind im wesentlichen gleich groß ausgebildet.

Das Dichtelement 112 ist vorzugsweise einstückig ausgebildet und aus einem Fluorpolymer-Material, beispielsweise aus PTFE oder aus einem PTFE-Compound, hergestellt.

Das Dichtelement 112 kann insbesondere aus einem PTFE-Compound gebildet werden, das bis zu 20 Gewichtsprozent Kohlenstofffasern und im übrigen PTFE enthält.

Das Dichtelement 112 kann aus einem hohlzylindrischen Rohling aus dem gesinterten PTFE-Compound durch spanende Bearbeitung hergestellt werden.

Die Federelemente 126 und 174 sind vorzugsweise als metallische Ringfedern mit U-, V- oder C-förmigem Querschnitt ausgebildet.

Das Dichtelement 112 ist im wesentlichen spiegelsymmetrisch zu seiner senkrecht zur Längsachse 108 verlaufenden Quermittelebene 182 ausgebildet. Auf diese Weise wird erreicht, dass die Orientierung des Dichtelements 112 relativ zu dem Kolben 110 keine Rolle spielt und das Dichtelement 112 daher auch in einer um 180° gedrehten Lage in den Dichtungsträger 132 eingesetzt werden kann.

Die Schultern 170 der statischen Dichtabschnitte 158 und 168 übergreifen einen Teil der jeweils benachbarten Ringnut 164 und jeweils einen Schenkel 166b des darin angeordneten Federelements 126 bzw. 174, so dass die Federelemente 126, 174 durch die Schultern 170 in der jeweiligen Ringnut 164 zurückgehalten werden.

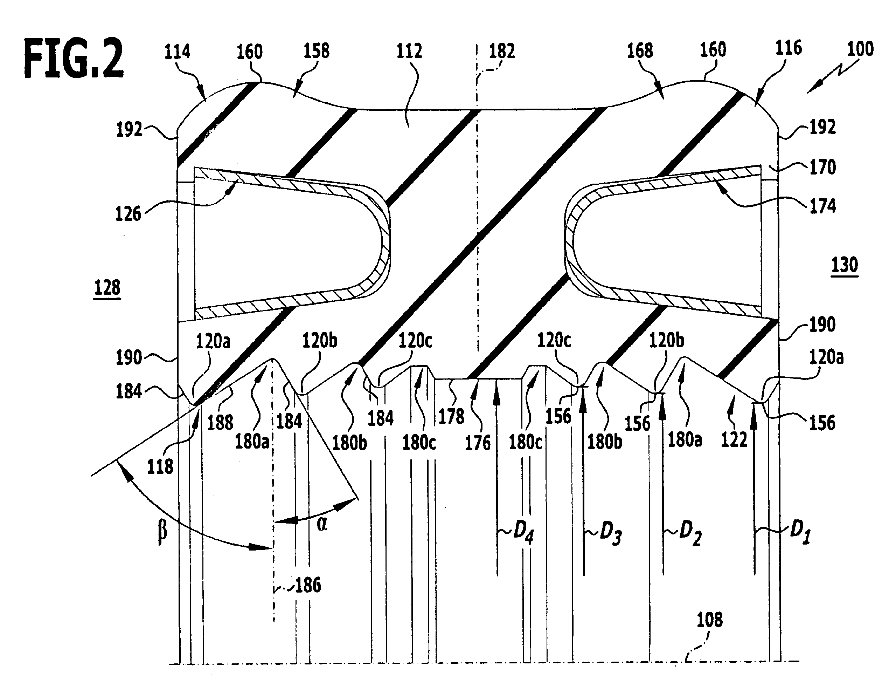

Eine in Fig. 2 dargestellte zweite Ausführungsform einer Dichtungsanordnung 100 unterscheidet sich von der in Fig. 1 dargestellten ersten Ausführungsform dadurch, dass die Leckage-Speicherräume 180 jedes dynamischen Dichtabschnitts 118, 122 bei der zweiten Ausführungsform unterschiedliche Größen aufweisen, wobei die Größe der Leckage-Speicherräume 180 mit wachsendem Abstand von den medienraumseitigen axialen Enden des Dichtelements 112 abnimmt, so dass die am nächsten an den axialen Enden des Dichtelements 112 angeordneten Leckage-Speicherräume 180a ein größeres Volumen aufweisen als die benachbarten, näher an der Quermittelebene 182 des Dichtelements 112 liegenden Leckage-Speicherräume 180b und diese wiederum ein größeres Volumen aufweisen als die am nächsten an der Quermittelebene 182 liegenden Leckage-Speicherräume 180c.

Durch die zur Quermittelebene 182 des Dichtelements 112 hin abnehmende Größe der Leckage-Speicherräume 180 wird der Umstand berücksichtigt, dass die Leckage-Menge von den axialen Enden des Dichtelements 112 zu der Quermittelebene 182 hin abnimmt, da die Leckage-Flüssigkeit eine zunehmende Anzahl von Dichtlippen 120 passieren muss, um in die näher an der Quermittelebene 182 liegenden Leckage-Speicherräume 180 zu gelangen.

Die unterschiedlichen Größen der Leckage-Speicherräume 180 werden dadurch erzielt, dass die die Leckage-Speicherräume 180 begrenzenden Dichtlippen und der Mittelsteg 176 im Herstellungszustand des Dichtelements 112 unterschiedliche Innendurchmesser aufweisen.

Wie aus Fig. 2 zu ersehen ist, nimmt der Innendurchmesser D der Dichtlippen 120 mit wachsendem Abstand von den axialen Enden des Dichtelements 112 zu, so dass der Innendurchmesser D₁ der den axialen Enden des Dichtelements 112 am nächsten liegenden äußeren Dichtlippen 120a an deren Dichtkante 156 kleiner ist als der Innendurchmesser D₂ der näher an der Quermittelebene 182 des Dichtelements 112 gelegenen mittleren Dichtlippen 120b an deren Dichtkante 156, und deren Innendurchmesser D₂ ist wiederum kleiner als der Innendurchmesser D₃ der am nächsten an der Quermittelebene 182 des Dichtelements 112 liegenden inneren Dichtlippen 120c an deren Dichtkante 156. Der Innendurchmesser D₃ der inneren Dichtlippe 120c ist wiederum kleiner als der Innendurchmesser D₄ der Abstützfläche 178 des Mittelstegs 176.

Beim Einführen des Kolbens 110 in die Ringöffnung des Dichtelements 112 werden die dynamischen Dichtabschnitte 118, 122 so verformt, dass die Dichtlippen 120 an ihrer Dichtkante 156 alle denselben Innendurchmesser aufweisen, welcher dem Außendurchmesser des Kolbens 110 entspricht, so dass die Dichtkanten 156 im Betrieb der Dichtungsanordnung alle an der Kolbenlauffläche 154 anliegen.

Um die Abstreifwirkung der dynamischen Dichtabschnitte 118, 122 zu verbessern und den Rücktransport von Leckage-Flüssigkeit beim Rückhub des Kolbens 110 zu erleichtern, weisen die nach außen, d.h. zu dem nächstliegenden axialen Ende des Dichtelements 112 hin weisenden Begrenzungsflächen 184 einen anderen Neigungswinkel (α) in Bezug auf eine senkrecht zur Längsachse 108 verlaufende Ebene 186 auf als die nach innen, d.h. zu der Quermittelebene 182 des Dichtelements 112 hin weisenden Begrenzungsflächen 188 der Dichtlippen 120.

Wie aus Fig. 2 zu ersehen ist, sind die nach außen weisenden Begrenzungsflächen 184 steiler ausgebildet als die nach innen weisenden Begrenzungsflächen 188, d.h. die nach außen weisenden Begrenzungsflächen 184 sind unter einem Winkel α gegen die senkrecht zur Längsachse 108 verlaufende Ebene 186 geneigt, welcher kleiner ist als der Winkel β, unter dem die nach innen weisenden Begrenzungsflächen 188 der Dichtlippen 120 gegen diese Ebene 186 geneigt sind.

Durch diese Gestaltung der Dichtlippen 120 wird erreicht, dass Leckage-Flüssigkeit die Dichtlippen 120 nur schwer in der Richtung von einem axialen Ende des Dichtelements 112 weg zu der Quermittelebene 182 des Dichtelements 112 hin überwinden kann, aber leicht in der Gegenrichtung von der Quermittelebene 182 weg zu einem axialen Ende des Dichtelements 112 hin zurückgeschleppt werden kann.

Außerdem wird durch die steile Ausbildung der nach außen weisenden Begrenzungsflächen 184 die Abstreifwirkung dieser Flächen verbessert.

Diese unterschiedlichen Neigungswinkel α und β der Begrenzungsflächen 184 bzw. 188 der Dichtlippen 120 sind bei allen in den Fig. 1 bis 8 dargestellten Ausführungsformen von Dichtungsanordnungen 100 realisiert.

Die statischen Dichtabschnitte 158 und 168 des Dichtelements 112 der zweiten Ausführungsform stehen, anders als bei der in Fig. 1 dargestellten ersten Ausführungsform, nicht über den jeweils zugeordneten ersten dynamischen Dichtabschnitt 118 bzw. zweiten dynamischen Dichtabschnitt 122 über, sondern enden in demselben Abstand von der Quermittelebene 182 wie der jeweils zugeordnete dynamische Dichtabschnitt 118 bzw. 122.

Im übrigen stimmt die in Fig. 2 dargestellte zweite Ausführungsform einer Dichtungsanordnung 100 hinsichtlich Aufbau und Funktion mit der in Fig. 1 dargestellten ersten Ausführungsform überein, auf deren vorstehende Beschreibung insoweit Bezug genommen wird.

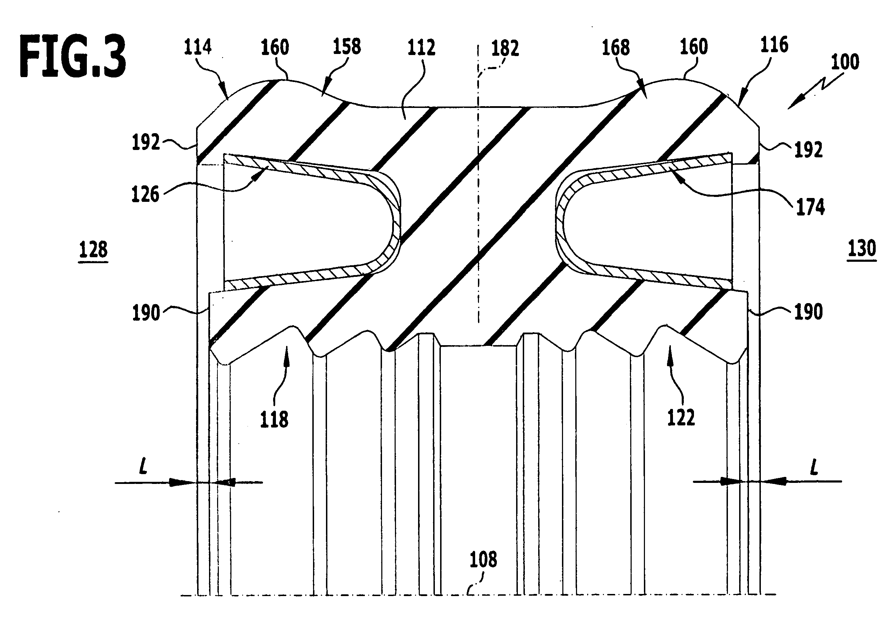

Eine in Fig. 3 dargestellte dritte Ausführungsform einer Dichtungsanordnung 100 unterscheidet sich von der in Fig. 2 dargestellten zweiten Ausführungsform dadurch, dass die axialen Enden 190 der dynamischen Dichtabschnitte 118 und 122 gegenüber den axialen Enden 192 der jeweils zugeordneten statischen Dichtabschnitte 158, 168 um eine Strecke L zur Quermittelebene 182 des Dichtelements 112 hin zurückgesetzt sind.

Dies bietet den Vorteil, dass beim Einpressen des Dichtelements 112 in den Dichtungsträger 132 die dynamischen Dichtabschnitte 118 und 122 nicht belastet werden.

Im übrigen stimmt die in Fig. 3 dargestellte dritte Ausführungsform einer Dichtungsanordnung 100 hinsichtlich Aufbau und Funktion mit der in Fig. 2 dargestellten zweiten Ausführungsform überein, auf deren vorstehende Beschreibung insoweit Bezug genommen wird.

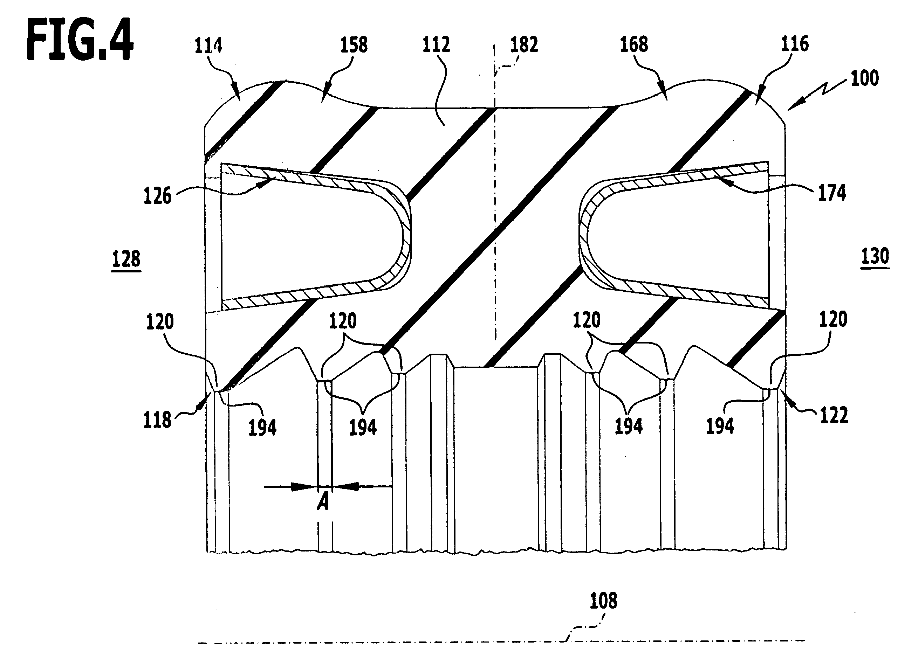

Eine in Fig. 4 dargestellte vierte Ausführungsform einer Dichtungsanordnung 100 unterscheidet sich von der in Fig. 2 dargestellten zweiten Ausführungsform dadurch, dass die Dichtlippen 120 der dynamischen Dichtabschnitte 118 und 122 keine scharfen Dichtkanten 156 aufweisen, sondern stattdessen abgeflacht ausgebildet sind und über im wesentlichen zylindrische Abstützflächen 194, die sich parallel zur Längsachse 108 jeweils über eine Strecke A erstrecken, flächig an der Kolbenlauffläche 154 anliegen.

Durch diese im Vergleich zu einer scharfen Dichtkante 156 größere Abstützfläche wird die spezifische Flächenpressung an jeder der Dichtlippen 120 vermindert und der Traganteil der Dichtlippen 120 im Neuzustand erhöht, wodurch der Dichtlippenverschleiß reduziert und die Lebensdauer des Dichtelements 112 verlängert wird.

Im übrigen stimmt die in Fig. 4 dargestellte vierte Ausführungsform einer Dichtungsanordnung 100 hinsichtlich Aufbau und Funktion mit der in Fig. 2 dargestellten zweiten Ausführungsform überein, auf deren vorstehende Beschreibung insoweit Bezug genommen wird.

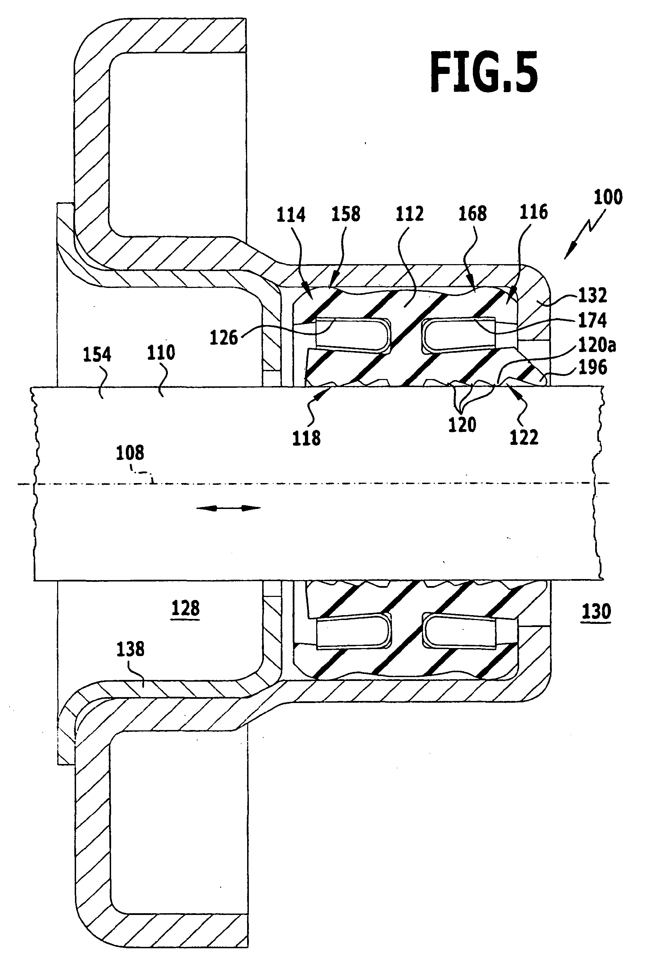

Eine in Fig. 5 dargestellte fünfte Ausführungsform einer Dichtungsanordnung 100 unterscheidet sich von der in Fig. 3 dargestellten dritten Ausführungsform dadurch, dass der zweite dynamische Dichtabschnitt 122 des Dichtelements 112 zusätzlich zu den drei Dichtlippen 120 mit einer Abstreiflippe 196 versehen ist, welche in axialer Richtung über den zweiten statischen Dichtabschnitt 168 übersteht und an der Kolbenlauffläche 154 anliegt.

Durch diese zusätzliche Abstreiflippe 196 werden Schmutzpartikel aus dem zweiten Medium, beispielsweise aus dem Motoröl, von den Dichtlippen 120 des zweiten dynamischen Dichtabschnitts 122 ferngehalten.

Alternativ hierzu könnte auch vorgesehen sein, die am nächsten zum axialen Ende des Dichtelements 112 liegende Dichtlippe 120a des zweiten dynamischen Dichtabschnittes 122 entfallen zu lassen und stattdessen eine Abstreiflippe 196 vorzusehen.

Im übrigen stimmt die in Fig. 5 dargestellte fünfte Ausführungsform einer Dichtungsanordnung 100 hinsichtlich Aufbau und Funktion mit der in Fig. 3 dargestellten dritten Ausführungsform überein, auf deren vorstehende Beschreibung insoweit Bezug genommen wird.

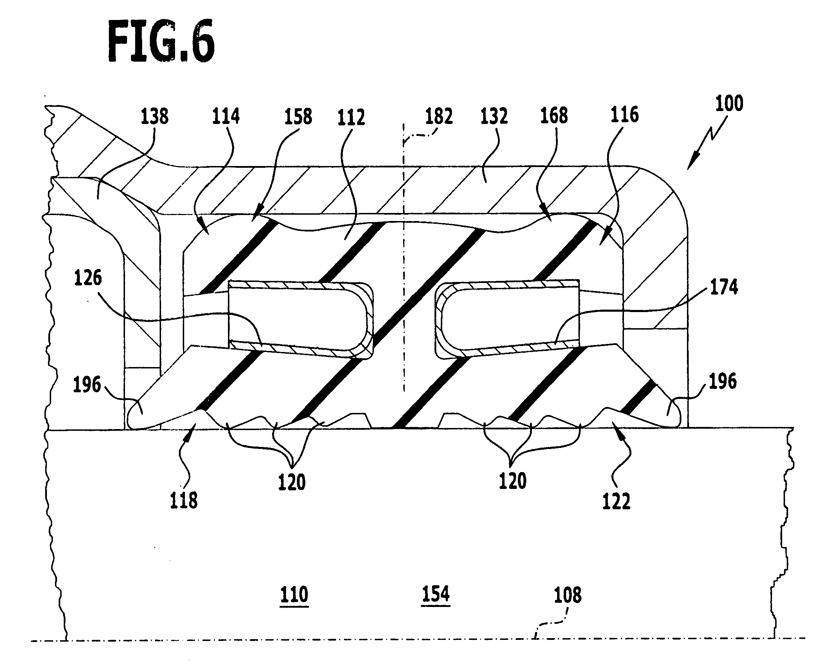

Eine in Fig. 6 dargestellte sechste Ausführungsform einer Dichtungsanordnung 100 unterscheidet sich von der in Fig. 5 dargestellten fünften Ausführungsform dadurch, dass das Dichtelement 112 spiegelsymmetrisch bezüglich seiner Quermittelebene 182 ausgebildet ist und somit an jedem seiner dynamischen Dichtabschnitte 118, 122 zusätzlich zu den jeweils drei Dichtlippen 120 jeweils eine Abstreiflippe 196 aufweist, welche in axialer Richtung über den jeweils zugeordneten statischen Dichtabschnitt 158 bzw. 168 übersteht.

Durch die Symmetrie des Dichtelements 112 bezüglich seiner Quermittelebene 182 ist gewährleistet, dass das Dichtelement 112 auch in einer um 180° gedrehten Lage in den Dichtungsträger 132 eingesetzt werden kann, was die Montage der Dichtungsanordnung 100 vereinfacht.

Im übrigen stimmt die in Fig. 6 dargestellte sechste Ausführungsform einer Dichtungsanordnung 100 hinsichtlich Aufbau und Funktion mit der in Fig. 5 dargestellten fünften Ausführungsform überein, auf deren vorstehende Beschreibung insoweit Bezug genommen wird.

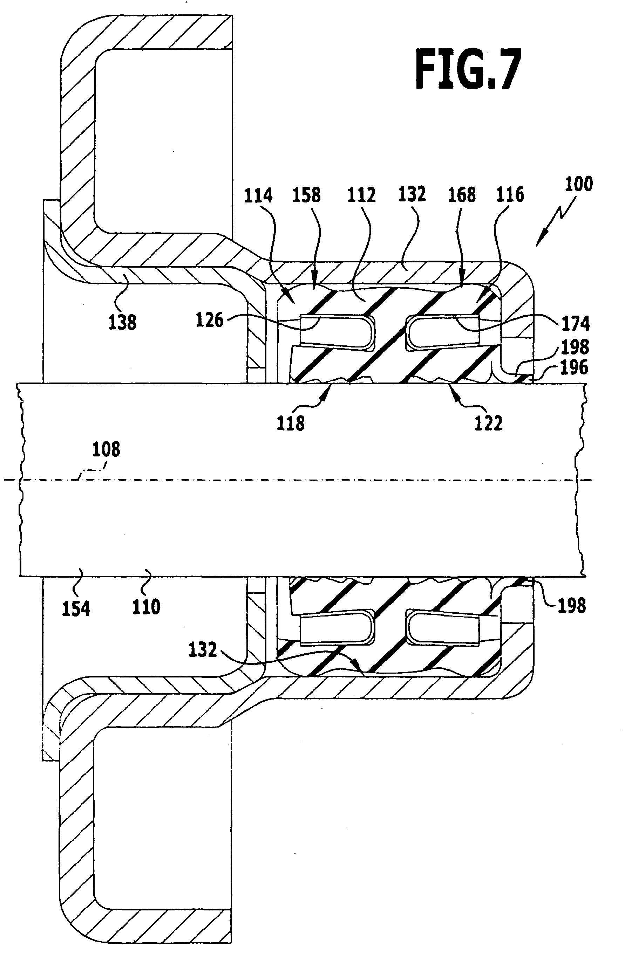

Eine in Fig. 7 dargestellte siebte Ausführungsform einer Dichtungsanordnung 100 unterscheidet sich von der in Fig. 5 dargestellten fünften Ausführungsform dadurch, dass die zusätzliche Abstreiflippe 196 des zweiten dynamischen Dichtabschnitts 122 als eine Memory-Abstreiflippe 198 ausgebildet ist, d.h. als eine Abstreiflippe, die durch einen Memory-Effekt des verwendeten Fluorpolymer-Materials, insbesondere eines PTFE- oder PTFE-Compound-Materials, gegen die Kolbenlauffläche 154 vorgespannt ist.

Dieser Memory-Effekt kommt dadurch zustande, dass die Memory-Abstreiflippe 198 zunächst durch spanende Bearbeitung mit einem Innendurchmesser hergestellt wird, welcher kleiner ist als der Außendurchmesser des Kolbens 110, und die Memory-Abstreiflippe 198 anschließend, bei Raumtemperatur oder bei erhöhter Temperatur, so verformt wird, dass der Kolben 110 hindurchgeführt werden kann. Bei einer Erwärmung der Dichtungsanordnung 100 im Betrieb der Hochdruckpumpe verformt sich der PTFE-haltige Werkstoff der Memory-Abstreiflippe 198 in Richtung seiner ursprünglichen Gestalt zurück. Durch diesen sogenannten "Plastic-Memory-Effekt" ist die Memory-Abstreiflippe 198 somit gegen die Kolbenlauffläche 154 vorgespannt und wird im Zuge des Verschleißes der Memory-Abstreiflippe 198 während des Betriebes der Dichtungsanordnung 100 kontinuierlich gegen den Kolben 110 nachgestellt, so dass stets eine hinreichende Abstreifwirkung der Memory-Abstreiflippe 198 gewährleistet ist.

Im übrigen stimmt die in Fig. 7 dargestellte siebte Ausführungsform einer Dichtungsanordnung 100 hinsichtlich Aufbau und Funktion mit der in Fig. 5 dargestellten fünften Ausführungsform überein, auf deren vorstehende Beschreibung insoweit Bezug genommen wird.

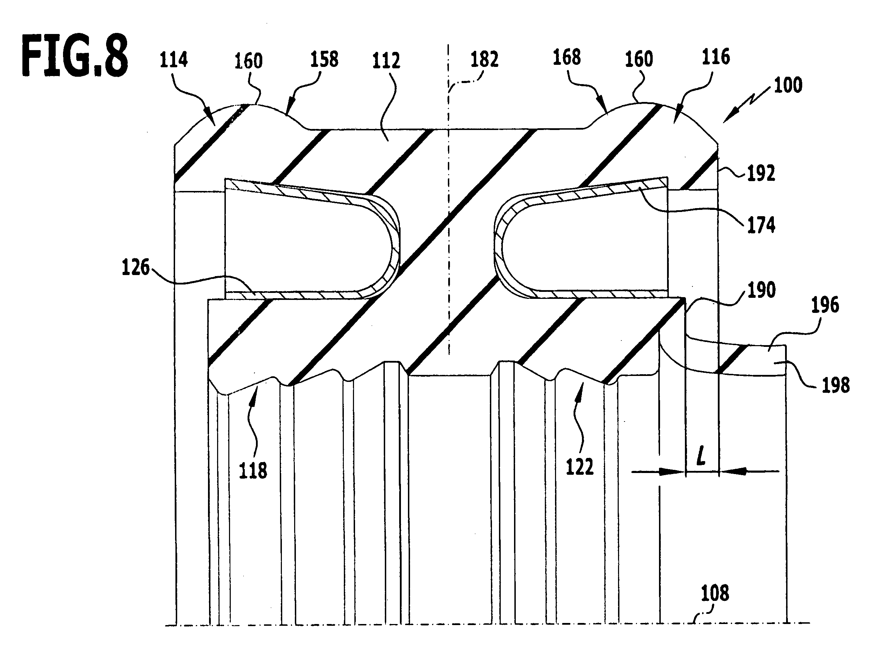

Eine in Fig. 8 dargestellte achte Ausführungsform einer Dichtungsanordnung 100 unterscheidet sich von der in Fig. 7 dargestellten siebten Ausführungsform dadurch, dass die dem axialen Ende nächstliegende Dichtlippe 120a des zweiten dynamischen Dichtabschnitts 122 entfallen ist und dadurch der zweite dynamische Dichtabschnitt 122 so verkürzt wurde, dass sein axiales Ende 190 gegenüber dem axialen Ende 192 des zweiten statischen Dichtabschnitts 168 um die Strecke L zurückgesetzt worden ist, so dass der zweite dynamische Dichtabschnitt beim Einpressen des Dichtelements 112 in den Dichtungsträger 132 nicht belastet wird.

Im übrigen stimmt die in Fig. 8 dargestellte achte Ausführungsform einer Dichtungsanordnung 100 hinsichtlich Aufbau und Funktion mit der in Fig. 7 dargestellten siebten Ausführungsform überein, auf deren vorstehende Beschreibung insoweit Bezug genommen wird.

## Patentansprüche

1. Dichtungsanordnung zum Abdichten zwischen einem mit einem ersten Medium gefüllten ersten Medienraum (128) und einem mit einem zweiten Medium gefüllten zweiten Medienraum (130), wobei sich ein bewegliches Bauteil (110), das in seiner Längsrichtung (108) verschiebbar und/oder um seine Längsrichtung (108) drehbar ist, im montierten Zustand der Dichtungsanordnung (100) durch die Dichtungsanordnung (100) hindurch erstreckt und wobei die Dichtungsanordnung (100) ein Dichtelement (112) umfasst, das einen gegenüber dem ersten Medienraum (128) abdichtenden ersten Abdichtbereich (114) und einen gegenüber dem zweiten Medienraum (130) abdichtenden zweiten Abdichtbereich (116) umfasst,
wobei der erste Abdichtbereich (114) einen im montierten Zustand der Dichtungsanordnung (100) an dem beweglichen Bauteil (110) anliegenden ersten dynamischen Dichtabschnitt (118) und der zweite Abdichtbereich (116) einen im montierten Zustand der Dichtungsanordnung (100) an dem beweglichen Bauteil (110) anliegenden zweiten dynamischen Dichtabschnitt (122) umfasst und mindestens einer der beiden dynamischen Dichtabschnitte (118, 122) mindestens zwei Dichtlippen (120) aufweist,
wobei jeder der beiden Abdichtbereiche (114, 116) jeweils mindestens ein Federelement (126, 174) umfasst, welches den dynamischen Dichtabschnitt (118, 122) des jeweiligen Abdichtbereiches (114, 116) im montierten Zustand der Dichtungsanordnung (100) gegen das bewegliche Bauteil (110) vorspannt,
wobei das Dichtelement (112) einen zwischen dem ersten dynamischen Dichtabschnitt (118) und dem zweiten dynamischen Dichtabschnitt (122) angeordneten Mittelsteg (176) umfasst, der im montierten Zustand der Dichtungsanordnung (100) an dem beweglichen Bauteil (110) anliegt, und
wobei mindestens ein dynamischer Dichtabschnitt (118, 122) des Dichtelements (112) mehrere Leckage-Speicherräume (180a, 180b, 180c) aufweist, die jeweils zwischen zwei benachbarten Dichtlippen (120) des dynamischen Dichtabschnitts (118, 122) oder zwischen der jeweils am nächsten zu dem Mittelsteg (176) gelegenen Dichtlippe und dem Mittelsteg (176) ausgebildet sind und unterschiedliche Größen aufweisen,
**dadurch gekennzeichnet,**
**dass** die Größe der Leckage-Speicherräume (180a, 180b, 180c) des mindestens einen dynamischen Dichtabschnitts mit wachsendem Abstand von einem medienraumseitigen Ende (190) des dynamischen Dichtabschnitts des Dichtelements (112) abnimmt.

2. Dichtungsanordnung nach Anspruch 1, **dadurch gekennzeichnet, dass** beide dynamischen Dichtabschnitte (118, 122) jeweils mindestens zwei Dichtlippen (120) aufweisen.

3. Dichtungsanordnung nach einem der Ansprüche 1 oder 2, **dadurch gekennzeichnet, dass** mindestens einer der dynamischen Dichtabschnitte (118, 122) mindestens drei Dichtlippen (120) aufweist.

4. Dichtungsanordnung nach Anspruch 3, **dadurch gekennzeichnet, dass** beide dynamischen Dichtabschnitte (118, 122) jeweils mindestens drei Dichtlippen (120) aufweisen.

5. Dichtungsanordnung nach einem der Ansprüche 1 bis 4, **dadurch gekennzeichnet, dass** das Dichtelement (112) im wesentlichen spiegelsymmetrisch bezüglich einer senkrecht zur Längsrichtung (108) des beweglichen Bauteils (110) verlaufenden Quermittelebene (182) des Dichtelements (112) ausgebildet ist.

6. Dichtungsanordnung nach einem der Ansprüche 1 bis 5, **dadurch gekennzeichnet, dass** der erste Abdichtbereich (114) einen radial auswärts von dem ersten dynamischen Dichtabschnitt (118) angeordneten ersten statischen Dichtabschnitt (158) umfasst.

7. Dichtungsanordnung nach einem der Ansprüche 1 bis 6, **dadurch gekennzeichnet, dass** der zweite Abdichtbereich (116) einen radial auswärts von dem zweiten dynamischen Dichtabschnitt (122) angeordneten zweiten statischen Dichtabschnitt (168) umfasst.

8. Dichtungsanordnung nach einem der Ansprüche 6 oder 7, **dadurch gekennzeichnet, dass** die Dichtungsanordnung (100) einen Dichtungsträger (132) umfasst, an dem mindestens ein statischer Dichtabschnitt (158, 168) des Dichtelements (112) anliegt.

9. Dichtungsanordnung nach einem der Ansprüche 6 bis 8, **dadurch gekennzeichnet, dass** mindestens ein statischer Dichtabschnitt (158, 168) in axialer Richtung über den zugehörigen dynamischen Dichtabschnitt (118, 122) desselben Abdichtbereiches (114, 116) übersteht.

10. Dichtungsanordnung nach einem der Ansprüche 6 bis 9, **dadurch gekennzeichnet, dass** sich mindestens ein statischer Dichtabschnitt (158, 168) des Dichtelements (112) in axialer Richtung an einem Dichtungsträger (132) oder an einem anderen Bauelement der Dichtungsanordnung (100) abstützt.

11. Dichtungsanordnung nach einem der Ansprüche 1 bis 10, **dadurch gekennzeichnet, dass** das Dichtelement (112) ein Fluorpolymer-Material umfasst.

12. Dichtungsanordnung nach Anspruch 11, **dadurch gekennzeichnet, dass** das Dichtelement (112) ein Polytetrafluorethylen oder ein modifiziertes Polytetrafluorethylen umfasst.

13. Dichtungsanordnung nach Anspruch 12, **dadurch gekennzeichnet, dass** das Dichtelement (112) aus einem Polytetrafluorethylen-Compound oder aus einem modifizierten Polytetrafluorethylen-Compound gebildet ist.

14. Dichtungsanordnung nach einem der Ansprüche 1 bis 13, **dadurch gekennzeichnet, dass** mindestens einer der Leckage-Speicherräume (180a, 180b, 180c) ringförmig ausgebildet ist.

15. Dichtungsanordnung nach einem der Ansprüche 1 bis 14, **dadurch gekennzeichnet, dass** die Dichtlippen (120a, 120b, 120c), welche die Leckage-Speicherräume (180a, 180b, 180c) begrenzen, im Herstellungszustand des Dichtelements (112) unterschiedliche Innendurchmesser (D₁, D₂, D₃) aufweisen.

16. Dichtungsanordnung nach einem der Ansprüche 1 bis 15, **dadurch gekennzeichnet, dass** der Innendurchmesser (D₁, D₂, D₃) der Dichtlippen (120a, 120b, 120c), welche die Leckage-Speicherräume (180a, 180b, 180c) begrenzen, im Herstellungszustand des Dichtelements (112) mit wachsendem Abstand von einem medienraumseitigen Ende (190) des Dichtelements (112) zunimmt.

17. Dichtungsanordnung nach einem der Ansprüche 1 bis 16, **dadurch gekennzeichnet, dass** mindestens eine Dichtlippe (120) des Dichtelements (112) zwei Begrenzungsflächen (184, 188) aufweist, die unter unterschiedlichen Winkeln (a, ß) gegen eine senkrecht zur Längsrichtung (108) des beweglichen Bauteils (110) verlaufende Ebene (186) geneigt sind.

18. Dichtungsanordnung nach Anspruch 17, **dadurch gekennzeichnet, dass** diejenige Begrenzungsfläche (184), die zu dem nächstliegenden medienraumseitigen Ende (190) des Dichtelements (112) hin weist, unter einem kleineren Winkel (a) gegen die senkrecht zur Längsrichtung (108) des beweglichen Bauteils (110) verlaufende Ebene (186) geneigt ist als diejenige Begrenzungsfläche (188), welche in die dem nächstliegenden medienraumseitigen Ende (190) des Dichtelements (112) abgewandte Richtung weist.

19. Dichtungsanordnung nach einem der Ansprüche 1 bis 18, **dadurch gekennzeichnet, dass** mindestens ein dynamischer Dichtabschnitt (118, 122) des Dichtelements (112) mindestens eine abgeflachte Dichtlippe (120) aufweist, die sich mit einer im wesentlichen parallel zur Längsrichtung (108) des beweglichen Bauteils (110) ausgerichteten Abstützfläche (194) im montierten Zustand der Dichtungsanordnung (100) an dem beweglichen Bauteil (110) abstützt.

20. Dichtungsanordnung nach einem der Ansprüche 1 bis 19, **dadurch gekennzeichnet, dass** mindestens ein dynamischer Dichtabschnitt (118, 122) des Dichtelements (112) zusätzlich zu den Dichtlippen (120) eine Abstreiflippe (196) aufweist.

21. Dichtungsanordnung nach Anspruch 20, **dadurch gekennzeichnet, dass** die Abstreiflippe (196) in axialer Richtung über einen statischen Dichtabschnitt (158, 168) desselben Abdichtbereiches (114, 116) des Dichtelements (112) übersteht.

22. Dichtungsanordnung nach Anspruch 21, **dadurch gekennzeichnet, dass** beide dynamischen Dichtabschnitte (118, 122) des Dichtelements (112) zusätzlich zu den Dichtlippen (120) jeweils eine Abstreiflippe (196) aufweisen.

23. Dichtungsanordnung nach einem der Ansprüche 20 bis 22, **dadurch gekennzeichnet, dass** mindestens eine Abstreiflippe (196) des Dichtelements (112) als eine Memory-Abstreiflippe (198) ausgebildet ist.

24. Dichtungsanordnung nach einem der Ansprüche 1 bis 23, **dadurch gekennzeichnet, dass** im Betrieb der Dichtungsanordnung (100) der mittlere Differenzdruck zwischen dem ersten Medienraum (128) und dem zweiten Medienraum (130) mindestens ungefähr 5 bar, vorzugsweise mindestens ungefähr 10 bar, beträgt.

25. Hochdruckpumpe, umfassend mindestens eine Dichtungsanordnung (100) nach einem der Ansprüche 1 bis 24.

26. Verwendung einer Hochdruckpumpe nach Anspruch 25 zum Einspritzen eines Kraftstoffs in einen Verbrennungsmotor.

## Claims

1. Sealing arrangement for sealing between a first medium space (128) filled with a first medium and a second medium space (130) filled with a second medium, wherein a movable component (110), which can be displaced in its longitudinal direction (108) and/or can be rotated about its longitudinal direction (108), extends through the sealing arrangement (100) when the sealing arrangement (100) is in the assembled state, and wherein the sealing arrangement (100) comprises a sealing element (112), which comprises a first sealing region (114), which seals in relation to the first medium space (128) and a second sealing region (116), which seals relative to the second medium space (130),
wherein the first sealing region (114) comprises a first dynamic sealing portion (118) abutting the movable component (110) when the sealing arrangement (100) is in the assembled state and the second sealing region (116) comprises a second dynamic sealing portion (122) abutting the movable component (110) when the sealing arrangement (100) is in the assembled state and at least one of the two dynamic sealing portions (118, 122) has at least two sealing lips (120),
wherein each of the two sealing regions (114, 116) comprises at least one spring element (126, 174), which biases the dynamic sealing portion (118, 122) of the respective sealing region (114, 116) against the movable component (110) when the sealing arrangement (100) is in the assembled state,
wherein the sealing element (112) comprises a centre web (176) arranged between the first dynamic sealing portion (118) and the second dynamic sealing portion (122), said centre web abutting the movable component (110) when the sealing arrangement (100) is in the assembled state and
wherein at least one dynamic sealing portion (118, 122) of the sealing element (112) has a plurality of leakage storage spaces (180a, 180b, 180c), which are formed between two respective adjacent sealing lips (120) of the dynamic sealing portion (118, 122) or between the respective sealing lip, which is placed closest to the centre web (176), and the centre web (176), and have different sizes,
**characterised in that**
the size of the leakage storage spaces (180a, 180b, 180c) of the at least one dynamic sealing portion decreases with a growing spacing from a medium space-side end (190) of the dynamic sealing portion of the sealing element (112).

2. Sealing arrangement according to claim 1, **characterised in that** the two dynamic sealing portions (118, 122) in each case have at least two sealing lips (120).

3. Sealing arrangement according to either of claims 1 or 2, **characterised in that** at least one of the dynamic sealing portions (118, 122) has at least three sealing lips (120).

4. Sealing arrangement according to claim 3, **characterised in that** the two dynamic sealing portions (118, 122) each have at least three sealing lips (120).

5. Sealing arrangement according to any one of claims 1 to 4, **characterised in that** the sealing element (112) is formed substantially mirror-symmetrically with respect to a transverse centre plane (182) of the sealing element (112) running perpendicular to the longitudinal direction (108) of the movable component (110).

6. Sealing arrangement according to any one of claims 1 to 5, **characterised in that** the first sealing region (114) comprises a first static sealing portion (158) arranged radially outwardly from the first dynamic sealing portion (118).

7. Sealing arrangement according to any one of claims 1 to 6, **characterised in that** the second sealing region (116) comprises a second static sealing portion (168) arranged radially outwardly from the second dynamic sealing portion (122).

8. Sealing arrangement according to either of claims 6 or 7, **characterised in that** the sealing arrangement (100) has a sealing carrier (132), on which at least one static sealing portion (158, 168) of the sealing element (112) abuts.

9. Sealing arrangement according to any one of claims 6 to 8, **characterised in that** at least one static sealing portion (158, 168) projects in the axial direction beyond the associated dynamic sealing portion (118, 122) of the same sealing region (114, 116).

10. Sealing arrangement according to any one of claims 6 to 9, **characterised in that** at least one static sealing portion (158, 168) of the sealing element (112) is supported in the axial direction on a sealing carrier (132) or on another component of the sealing arrangement (100).

11. Sealing arrangement according to any one of claims 1 to 10, **characterised in that** the sealing element (112) comprises a fluoropolymer material.

12. Sealing arrangement according to claim 11, **characterised in that** the sealing element (112) comprises a polytetrafluoroethylene or a modified polytetrafl uoroethylene.

13. Sealing arrangement according to claim 12, **characterised in that** the sealing element (112) is formed from a polytetrafluoroethylene compound or from a modified polytetrafluoroethylene compound.

14. Sealing arrangement according to any one of claims 1 to 13, **characterised in that** at least one of the leakage storage spaces (180a, 180b, 180c) is annular.

15. Sealing arrangement according to any one of claims 1 to 14, **characterised in that** the sealing lips (120a, 120b, 120c), which delimit the leakage storage spaces (180a, 180b, 180c), have different internal diameters (D₁, D₂, D₃) when the sealing element (112) is in the production state.

16. Sealing arrangement according to any one of claims 1 to 15, **characterised in that** the internal diameter (D₁, D₂, D₃) of the sealing lips (120a, 120b, 120c), which delimit the leakage storage spaces (180a, 180b, 180c), increases when the sealing element (112) is in the production state, with a growing spacing from a medium space-side end (190) of the sealing element (112).

17. Sealing arrangement according to any one of claims 1 to 16, **characterised in that** at least one sealing lip (120) of the sealing element (112) has two delimiting faces (184, 188), which are inclined at different angles (a, ß) toward a plane (186) running perpendicular to the longitudinal direction (108) of the movable component (110).

18. Sealing arrangement according to claim 17, **characterised in that** the delimiting face (184), which is directed to the closest medium space-side end (190) of the sealing element (112), is inclined at a smaller angle (a) toward the plane (186) running perpendicular to the longitudinal direction (108) of the movable component (110) than the delimiting face (188), which is directed in the direction away from the closest medium space-side end (190) of the sealing element (112).

19. Sealing arrangement according to any one of claims 1 to 18, **characterised in that** at least one dynamic sealing portion (118, 122) of the sealing element (112) has at least one flattened sealing lip (120), which is supported on the movable component (110) by a support face (194) oriented substantially parallel to the longitudinal direction (108) of the movable component (110), when the sealing arrangement (100) is in the assembled state.

20. Sealing arrangement according to any one of claims 1 to 19, **characterised in that** at least one dynamic sealing portion (118, 122) of the sealing element (112), in addition to the sealing lips (120), has a wiping lip (196).

21. Sealing arrangement according to claim 20, **characterised in that** the wiping lip (196) projects in the axial direction over a static sealing portion (158, 168) of the same sealing region (114, 116) of the sealing element (112).

22. Sealing arrangement according to claim 21, **characterised in that** the two dynamic sealing portions (118, 122) of the sealing element (112), in addition to the sealing lips (120), in each case have a wiping lip (196).

23. Sealing arrangement according to any one of claims 20 to 22, **characterised in that** at least one wiping lip (196) of the sealing element (112) is formed as a memory wiping lip (198).

24. Sealing arrangement according to any one of claims 1 to 23, **characterised in that** the mean differential pressure between the first medium space (128) and the second medium space (130) is at least about 5 bar, preferably at least about 10 bar, during operation of the sealing arrangement (100).

25. High-pressure pump, comprising at least one sealing arrangement (100) according to any one of claims 1 to 24.

26. Use of a high-pressure pump according to claim 25 for injecting a fuel into an internal combustion engine.

## Revendications

1. Système d'étanchéité servant à assurer l'étanchéité entre une première chambre à fluides (128) remplis d'un premier fluide et une deuxième chambre à fluides (130) remplis d'un deuxième fluide, un composant mobile (110), qui peut être coulissé dans sa direction longitudinale (108) et/ou tourné autour de sa direction longitudinale (108), s'étendant à travers le système d'étanchéité (100) lorsque le système d'étanchéité (110) est monté et le système d'étanchéité (100) comportant un élément d'étanchéité (112) qui comporte une première zone d'étanchéification (114) assurant l'étanchéité par rapport à la première chambre à fluides (128) et une deuxième zone d'étanchéification (116) assurant l'étanchéité par rapport à la deuxième chambre à fluides (130),
la première zone d'étanchéification (114) comportant une première section d'étanchéité dynamique (118) reposant au niveau du composant mobile (110) lorsque le système d'étanchéité (100) est monté et la deuxième zone d'étanchéification (116) comportant une deuxième section d'étanchéité dynamique (122) reposant au niveau du composant mobile (110) lorsque le système d'étanchéité (100) est monté et au moins une des deux sections d'étanchéité dynamiques (118, 122) présentant au moins deux lèvres d'étanchéité (120),
chacune des deux zones d'étanchéification (114, 116) comportant respectivement au moins un élément ressort (126, 174), qui précontraint contre le composant mobile (110) la section d'étanchéité dynamique (118, 122) de chaque zone d'étanchéification (114, 116) lorsque le système d'étanchéité (100) est monté,
l'élément d'étanchéité (112) comportant une traverse médiane (176) disposée entre la première section d'étanchéité dynamique (118) et la deuxième zone d'étanchéité dynamique (122), laquelle traverse repose sur le composant mobile (110) lorsque le système d'étanchéité (100) est monté,
et
au moins une section d'étanchéité dynamique (118, 122) de l'élément d'étanchéité (112) présentant plusieurs collecteurs de fuite (180a, 180b, 180c), qui sont respectivement réalisés entre deux lèvres d'étanchéité (120) voisines de la section d'étanchéité dynamique (118, 122) ou entre la lèvre d'étanchéité respectivement située après la traverse médiane (176) et la traverse médiane (176) et qui présentent diverses dimensions,
**caractérisé en ce que**
la dimension des collecteurs de fuite (180a, 180b, 180c) de la au moins une section d'étanchéité dynamique se réduit à mesure que l'écart grandit par rapport à l'extrémité (190) côté chambre à fluides de la section d'étanchéité dynamique de l'élément d'étanchéité (112).

2. Système d'étanchéité selon la revendication 1, **caractérisé en ce que** les deux sections d'étanchéité dynamiques (118, 122) présentent respectivement au moins deux lèvres d'étanchéité (120).

3. Système d'étanchéité selon l'une quelconque des revendications 1 ou 2, **caractérisé en ce qu'**au moins une des sections d'étanchéité dynamiques (118, 122) présente au moins trois lèvres d'étanchéité (120).

4. Système d'étanchéité selon la revendication 3, **caractérisé en ce que** les deux sections d'étanchéité dynamiques (118, 122) présentent respectivement au moins trois lèvres d'étanchéité (120).

5. Système d'étanchéité selon l'une quelconque des revendications 1 à 4, **caractérisé en ce que** l'élément d'étanchéité (112) est réalisé de manière essentiellement symétrique en miroir par rapport à un plan médian transversal (182) de l'élément d'étanchéité (112), lequel plan s'étend de manière perpendiculaire par rapport à la direction longitudinale (108) du composant mobile (110).

6. Système d'étanchéité selon l'une quelconque des revendications 1 à 5, **caractérisé en ce que** la première zone d'étanchéification (114) comporte une première section d'étanchéité statique (158) disposée de manière radiale vers l'extérieur par rapport à la première section d'étanchéité dynamique (118).

7. Système d'étanchéité selon l'une quelconque des revendications 1 à 6, **caractérisé en ce que** la deuxième zone d'étanchéification (116) comporte une deuxième section d'étanchéité statique (168) disposée de manière radiale vers l'extérieur par rapport à la deuxième section d'étanchéité dynamique (122).

8. Système d'étanchéité selon l'une quelconque des revendications 6 ou 7, **caractérisé en ce que** le système d'étanchéité (100) comporte un support d'étanchéité (132), sur lequel repose au moins une section d'étanchéité statique (158, 168) de l'élément d'étanchéité (112).

9. Système d'étanchéité selon l'une quelconque des revendications 6 à 8, **caractérisé en ce qu'**au moins une section d'étanchéité statique (158, 168) dépasse dans une direction axiale la section d'étanchéité dynamique (118, 122) associée de la même zone d'étanchéification (114, 116).

10. Système d'étanchéité selon l'une quelconque des revendications 6 à 9, **caractérisé en ce qu'**au moins une section d'étanchéité statique (158, 168) de l'élément d'étanchéité (112) s'appuie dans une direction axiale sur un support d'étanchéité (132) ou sur un autre composant du système d'étanchéité (100).

11. Système d'étanchéité selon l'une quelconque des revendications 1 à 10, **caractérisé en ce que** l'élément d'étanchéité (112) comporte un matériau en fluoropolymère.

12. Système d'étanchéité selon la revendication 11, **caractérisé en ce que** l'élément d'étanchéité (112) comporte un polytétrafluoroéthylène ou un polytétrafluoroéthylène modifié.

13. Système d'étanchéité selon la revendication 12, **caractérisé en ce que** l'élément d'étanchéité (112) est formé à partir d'un composé à base de polytétrafluoroéthylène ou d'un composé à base de polytétrafluoroéthylène modifié.

14. Système d'étanchéité selon l'une quelconque des revendications 1 à 13, **caractérisé en ce qu'**au moins un des collecteurs de fuite (180a, 180b, 180c) est réalisé de manière à présenter une forme annulaire.

15. Système d'étanchéité selon l'une quelconque des revendications 1 à 14, **caractérisé en ce que** les lèvres d'étanchéité (120a, 120b, 120c), qui délimitent les collecteurs de fuite (180a, 180b, 180c), présentent à l'état de fabrication de l'élément d'étanchéité (112) des diamètres intérieurs (D₁, D₂, D₃) différents.

16. Système d'étanchéité selon l'une quelconque des revendications 1 à 15, **caractérisé en ce que** le diamètre intérieur (D₁, D₂, D₃) des lèvres d'étanchéité (120a, 120b, 120c), lesquelles délimitent les collecteurs de fuite (180a, 180b, 180c) augmente à l'état de fabrication de l'élément d'étanchéité (112) à mesure que l'écart grandit par rapport à l'extrémité (190) de l'élément d'étanchéité (112) côté chambre à fluides.

17. Système d'étanchéité selon l'une quelconque des revendications 1 à 16, **caractérisé en ce qu'**au moins une lèvre d'étanchéité (120) de l'élément d'étanchéité (112) présente deux faces de délimitation (184, 188), qui sont inclinées à différents angles (a, ß) contre un plan (186) s'étendant de manière perpendiculaire par rapport à la direction longitudinale (108) du composant mobile (110).

18. Système d'étanchéité selon la revendication 17, **caractérisé en ce que** la face de délimitation (184), qui est dirigée en direction de l'extrémité (190) la plus proche de l'élément d'étanchéité (112) côté chambre à fluides, est inclinée à un angle de plus petite valeur (a) contre le plan (186) s'étendant de manière perpendiculaire par rapport à la direction longitudinale (108) du composant mobile (110) que la face de délimitation (188), qui est dirigée dans la direction opposée à l'extrémité (190) la plus proche de l'élément d'étanchéité (112) côté chambre à fluides.

19. Système d'étanchéité selon l'une quelconque des revendications 1 à 18, **caractérisé en ce qu'**au moins une section d'étanchéité dynamique (118, 122) de l'élément d'étanchéité (112) présente au moins une lèvre d'étanchéité (120) aplatie, qui s'appuie au niveau du composant mobile (110) avec une face d'appui (194) orientée de manière essentiellement parallèle par rapport à la direction longitudinale (108) du composant mobile (110) lorsque le système d'étanchéité (100) est monté.

20. Système d'étanchéité selon l'une quelconque des revendications 1 à 19, **caractérisé en ce qu'**au moins une section d'étanchéité dynamique (118, 122) de l'élément d'étanchéité (112) présente en plus des lèvres d'étanchéité (120) une lèvre de raclage (196).

21. Système d'étanchéité selon la revendication 20, **caractérisé en ce que** la lèvre de raclage (196) dépasse dans une direction axiale une section d'étanchéité statique (158, 168) de la même zone d'étanchéification (114, 116) de l'élément d'étanchéité (112).

22. Système d'étanchéité selon la revendication 21, **caractérisé en ce que** les deux sections d'étanchéité dynamiques (118, 122) de l'élément d'étanchéité (112) présentent en plus des lèvres d'étanchéité (120) respectivement une lèvre de raclage (196).

23. Système d'étanchéité selon l'une quelconque des revendications 20 à 22, **caractérisé en ce qu'**au moins une lèvre de raclage (196) de l'élément d'étanchéité (112) est réalisée en tant qu'une lèvre de raclage à mémoire (198).

24. Système d'étanchéité selon l'une quelconque des revendications 1 à 23, **caractérisé en ce que** lors du fonctionnement du système d'étanchéité (100), la pression différentielle moyenne entre la première chambre à fluides (128) et la deuxième chambre à fluides (130) est d'au moins environ 5 bars, de préférence d'au moins environ 10 bars.

25. Pompe à haute pression, comportant au moins un système d'étanchéité (100) selon l'une quelconque des revendications 1 à 24.

26. Utilisation d'une pompe à haute pression selon la revendication 25 servant à injecter un carburant dans un moteur à combustion interne.
